# EUROPEAN PATENT APPLICATION

(11) **EP 4 444 021 A1**
(43) Date of publication of application: **09.10.2024**
(21) Application number: 24167125.4
(22) Date of filing: 28.03.2024
(51) Int. Cl.: H04W 76/10, H04W 76/20, H04W 8/22

(54) **STATE-DEPENDENT RRC CONFIGURATION METHOD FOR 6G**

(30) Priority: 06.04.2023 FI 20235401
(71) Applicant: Nokia Technologies Oy, 02610 Espoo (FI)
(72) Inventor: LASELVA, Daniela, Klarup (DK); KOLDING, Troels Emil, Klarup (DK); DALSGAARD, Lars, Oulu (FI); HENTTONEN, Tero, Espoo (FI)
(74) Representative: Nokia EPO representatives

(57) **Abstract**

An apparatus, in a user equipment, is provided, which comprises at least one processor and at least one memory including computer program code, the at least one memory and the computer program code configured to, with the at least one processor, cause the apparatus at least to perform: storing at least one module, the at least one module comprising at least one parameter related to radio resource control, and applying at least one module of the stored modules for use in a radio resource control configuration.

## Description

### Field of the Invention

The present invention relates to an apparatus, a method and a computer program product for providing a state-dependent RRC configuration, for example in 6G.

### Related background Art

The following meanings for the abbreviations used in this specification apply:
- CA: Carrier Aggregation
- CE: Control Element
- CP: C-Plane, Control Plane
- CDRX: Connected mode DRX
- DCI: Downlink Control Information
- DRB: Data Radio Bearer
- DRX: Discontinuous Reception
- HO: Handover
- ID: Identifier
- IE: Information Element
- MAC: Medium Access Control
- MIMO: Multiple-Input Multiple-Output
- NW: Network
- PUSCH: Physical Uplink Shared Channel
- RACH: Random Access Channel
- RPU: Radio Protocol Unit
- RRC: Radio Resource Control
- SIB: System Information Broadcast
- UE: User Equipment
- UP: U-Plane, User Plane

Example embodiments, although not limited to this, relate to a Radio Resource Control (RRC) concept, in which it is possible to build up and maintain RRC configurations in a layered, scalable and robust manner.

In this connection, it would be beneficial to have a more flexible approach on setting up RRC configurations. For example, with the current 5G definitions only one configuration can be stored by the UE and network, which is then used when the connection is e.g., resumed.

### Summary of the Invention

Example embodiments address this situation aim to provide a more flexible RRC configuration.

According to a first aspect of some example embodiments, an apparatus is provided, in a user equipment, the apparatus comprising: at least one processor and at least one memory including computer program code, the at least one memory and the computer program code configured to, with the at least one processor, cause the apparatus at least to perform: storing at least one module, the at least one module comprising at least one parameter related to radio resource control, and applying at least one module of the stored modules for use in a radio resource control configuration.

According to a second aspect of some example embodiments, an apparatus, in a network control element, is provided, the apparatus comprising: at least one processor and at least one memory including computer program code, the at least one memory and the computer program code configured to, with the at least one processor, cause the apparatus at least to perform: receiving, from a user equipment, capability information indicating capabilities of the user equipment, determining at least one module for a radio resource control configuration for the user equipment based on the received capability information, the at least one module comprising at least one parameter related to radio resource control, and forwarding the at least one module to the user equipment.

According to a third aspect of some example embodiments, a method for use in a user equipment is provided, the method comprising:
at least one processor and at least one memory including computer program code, the at least one memory and the computer program code configured to, with the at least one processor, cause the apparatus at least to perform:
storing at least one module, the at least one module comprising at least one parameter related to radio resource control, and
applying at least one module of the stored modules for use in a radio resource control configuration.

According to a fourth aspect, a method for use in a network control element is provided, the method comprising:
receiving, from a user equipment, capability information indicating capabilities of the user equipment,
determining at least one module for a radio resource control configuration for the user equipment based on the received capability information, the at least one module comprising at least one parameter related to radio resource control, and
forwarding the at least one module to the user equipment.

### Brief Description of the Drawings

These and other objects, features, details and advantages will become more fully apparent from the following detailed description of example embodiments, which is to be taken in conjunction with the appended drawings, in which:
Fig. 1A shows a UE 1 according to an example embodiment,
Fig. 1B shows a procedure carried out by the UE 1 according to the example embodiment,
Fig. 2A shows a gNB 2 according to an example embodiment,
Fig. 2B shows a procedure carried out by the gNB 2 according to the example embodiment,
Fig. 3 illustrates a modular RRC configuration per RRC state according to some example embodiments,
Fig. 4 shows a basic approach for storing modules related to RRC configurations in an UE according to an example embodiment, and
Fig. 5A and 5B show more details signal flows according to example embodiments.

### Detailed Description of example embodiments

In the following, description will be made to example embodiments. It is to be understood, however, that the description is given by way of example only, and that the described example embodiments are by no means to be understood as limiting the present invention thereto.

Before describing example embodiment, in the following, problems of the prior art are discussed in some more detail.

As mentioned above, some example embodiments aim to provide a Radio Resource Control (RRC) concept, in which it is possible to build up and maintain RRC configurations in a layered, scalable and robust manner. Configurations may be built on top of a core RRC kernel (which may comprise a basic/minimum/default configuration) with RRC modifications (mods) handled in a defined manner. The RRC kernel can be defined as a basic or minimum or default configuration for RRC. For example, the RRC kernel may include:
A core RRC kernel, which is a limited kernel compatible with ex. all UE from a certain release. While it is a common/core RRC kernel, it may be updated by the network. For example, the network may construct the kernel such that it becomes UE specific, network specific, or even cell specific. The core RRC kernel may be stored in the UE not only in the RRC connected mode, but also in other RRC states such as Idle and Inactive states as known from 5G.

A RRC kernel that is stored in the UE to be used if or when for example returning from a non-connected state to connected state. Such kernel may be modified so that it is more customized e.g., optimized towards preferences from UE (ex. power consumption), network (ex. based on carrier configurations etc.) and/or UE capabilities.

An active RRC kernel is used in the current connected mode.

Preferably, both the network and the UE have a consistent view of what RRC configurations are stored and shall be applied under any event.

The above concept may also be referred to as "layered kernel concept" since different kernels are layered on each other. Basically, the layered RRC configuration concept is envisioned to improve robustness/resiliency, speed, agility of doing RRC connection setup and RRC configuration modifications, and to reduce signalling overhead of for example RRC connection setup overall.

In state-of-the-art RRC configuration management, there is always only a single RRC configuration that is active in the UE at a given time. However, different RRC parameters provisioned to the UE as part of the RRC configuration may be activated and deactivated with L1/L2 signalling. For example, a configured SCell can be (de)activated with a MAC CE command. Similarly, multiple Configured Grants PUSCH configurations can be configured, and the active configuration can be switched with DCI-based signalling (e.g. in CG type-2).

In general, there are many considerations when determining the RRC configuration for a given UE. To mention some:
- Some parameter settings may depend on the current network conditions (ex. current load) or on the UE's services (ex. amount of traffic or QoS requirements may differ across UE's services)
- Some parameter settings are not robust towards ex. mobility in connected or idle mode or other factors
- If network is memory limited, network may not want to have cell and user specific information stored on the network side for a long period of time or at all.
- Change of RRC configuration parameters always assumes a minimum reconfiguration delay. Besides transmission of the parameters, there is also a delay on the UE side receiving and processing the RRC configuration, taking any new parameters into use, and the delay for acknowledging to the network that a certain change is enforced (i.e. synchronized switch between the UE and NW).

In one example, the network can configure the UE with an RRC configuration (e.g. a Suspend Configuration) which is stored by the UE during Inactive mode. This stored configuration enables fast resuming of the RRC connection (in rel-15). In Rel-17 it enables fast setup of U-plane (UP) / C-plane (CP) data via small data transmissions in RRC Inactive mode. UE will store this one set of parameters (e.g. security context, DRBs to resume, RACH and/or PUSCH resources) which is then used when the connection is e.g. resumed. This solution leads to less signalling and reduced latency when resuming the connection when UE enters connected mode. Hence, it helps in decreasing the latency of resuming the UP/CP data exchange.

However, currently only one configuration can be stored by the UE and network for the UE not in connected state, and network needs to consider conservatively the connection when it is resumed. One goal of 6G is to enable a fast and smooth state change transition between different operating modes of the UE, whether that being Idle mode, Inactive mode and connected mode or different modes in connected state.

When considering such goal using a layered RRC concept, looking at RRC configurations/settings as constants across RRC states is no longer sufficient.

Thus, example embodiments provide measures in order to enable flexibly changing or setting RRC configurations.

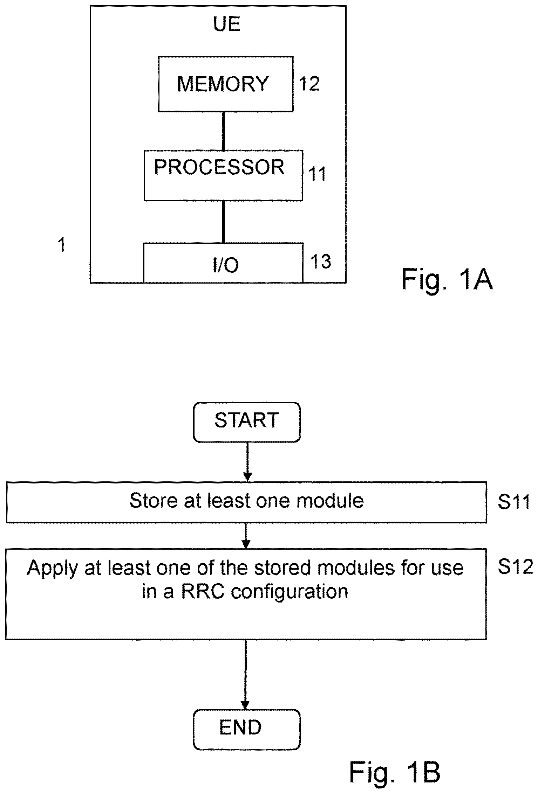

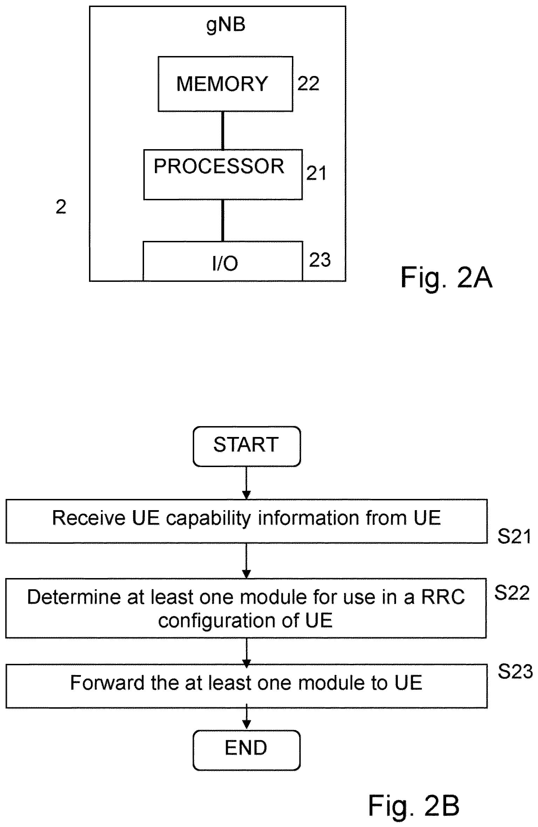

In the following, a general overview of some example embodiments is described by referring to Figs. 1A, 1B, 2A and 2B.

Fig. 1A shows a UE 1 according to the present example embodiment. The UE 1 is an example for an apparatus, which could be or be a part of a user equipment, for example. A procedure carried out by the UE 1 is illustrated in Fig. 1B. The UE 1 shown in Fig. 1A comprises at least one processor 11 and at least one memory 12 including computer program code. The at least one processor 11, with the at least one memory 12 and the computer program code, is configured to cause the apparatus to perform: storing at least one module, each module comprising at least one parameter related to radio resource control (S11 in Fig. 1B, and applying at least one module of the stored modules for use in a radio resource control configuration (S12 in Fig. 1B).

Fig. 2A shows a gNB 2 according to the present example embodiment. The gNB 2 is an example for an apparatus, which could be or be a part of a network control element, such as a base station or the like, for example. A procedure carried out by the gNB 2 is illustrated in Fig. 2B. The gNB 2 shown in Fig. 2A comprises at least one processor 21 and at least one memory 22 including computer program code. The at least one processor 21, with the at least one memory 22 and the computer program code, is configured to cause the apparatus to perform: receiving, from a user equipment (e.g., UE 1 shown in Fig. 1A), capability information indicating capabilities of the user equipment (S21 in Fig. 2B), determining at least one module for a radio resource control configuration for the user equipment based on the received capability information, each module comprising at least one parameter related to radio resource control (S22 in Fig. 2B), and forwarding the at least one module to the user equipment (S23 in Fig. 2B).

Thus, according to example embodiments, the UE stores one or more modules, which can be applied for different RRC configurations beforehand. Hence, the UE can apply one or more of the stored modules for implementing a certain RRC configuration. The modules may be negotiated beforehand with the network, e.g., the gNB 2. Alternatively, some modules may be pre-determined without negotiation with the network. For example, such modules could be defined in specifications.

In this way, a very flexible RRC configuration is possible, since it is not necessary to carry out specific RRC configuration procedures (such as a RRCReconfiguration procedure) each time the RRC configuration has to be changed.

The apparatuses 1 and 2 shown in Figs. 1A and 2A may comprise more components than described above, and may further comprise I/O units 13, 23, which are capable of transmitting to and receiving from other network elements.

Alternatively, the UE 1 may store at least two modules, each module comprising at least one parameter related to radio resource control. Moreover, the gNB 2 may determine two modules based on the capability information received from the UE.

Each module may comprise one or more RRC related parameter. One module may correspond to a complete RRC configuration. However, it is also possible that an RRC configuration consists of several modules.

That is, each module can be applied for one or more RRC states. The parameters of a module can be configured per RRC state. They might be different for each state. Some parameters may be used only in one state and others in more states.

A module can be activated by the network. For each RRC State one or a set of modules can be configured.

Several modules can be active, but only one RRC configuration per RRC state.

A module can also be referred to as a profile, i.e. the terms "module" and "profile" are interchangeable.

When the UE 1 applies a certain module of the stored modules based on an instruction received from a network control element (e.g., gNB1) or based on a pre-defined event, this means that the UE could apply or activate a stored module.

In the following, some more detail embodiments are described.

In particular, according to some embodiments, a method is provided in which the network may configure the UE with one or more set of modules which are configured according to and accounting the UE and network feature support. A module, once configured, is stored by the UE (and network). The modules may be stored independent of the current state of the UE and possible state changes. Hence, modules can be configured in Connected mode and stored while for example in Idle mode, Inactive, Connected mode etc.

Additionally, a UE can be requested by the network to apply a certain module with or without an RRC reconfiguration. It is also possible to activate some modules while deactivating the others, such that different modules can be also combined together. In this connection "to activate" a module means that the module (the RRC parameters included in this module) are applied for the current RRC configuration. Similarity, "to deactivate" a module means that the module (the RRC parameters included in this module) are no longer used in the active RRC configuration.

For example, when a module is deactivated, the UE may deactivate / release the resources associated to each parameter included in a deactivated module, or may apply a default parameter setting for each parameter included in a deactivated module, where the default setting is as per a default module or RRC kernel or as per broadcast setting or written in specs.

A module may consist of a set of RRC parameters, which may be standalone (e.g. full RRC configuration) or may be changed (modified) on top of a current active configuration (e.g. delta configuration over an active RRC configuration such as the RRC kernel). The "delta configuration" means that only those RRC parameters in the current active RRC configuration are changed, which are different to those of the module (being either not present or having a different value in the current active RRC configuration). When the network updates the UE active RRC configuration, the update may at the same time apply for the one or more stored modules according to network indication.

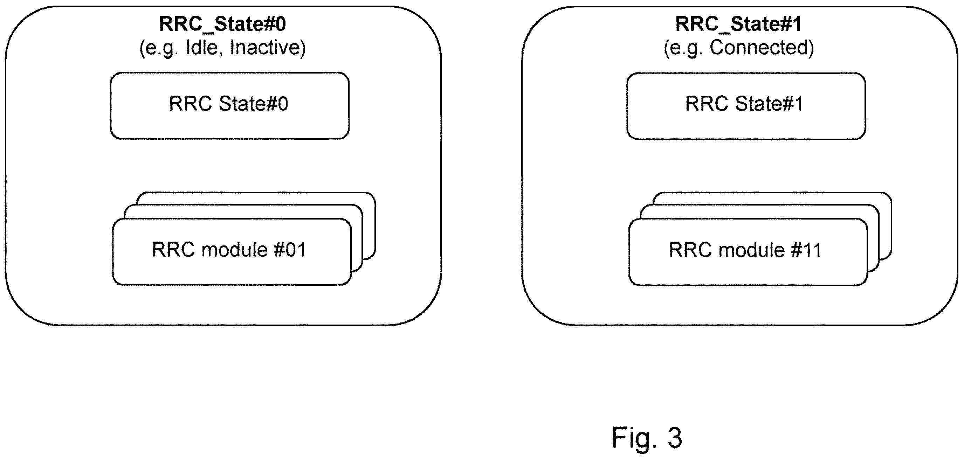

In one example, when the network updates the UE active RRC configuration, the UE applies the updated parameters also to the one or more RRC module(s) (as illustrated in Fig. 3 described below), and the UE RRC parameters contained within the one or more modules may be modified (i.e. new parameters may be added, some parameters released, some parameter values modified). For example, some configurations (e.g. the configuration of some parameters or some parameter updates) may apply only for a subset of RRC modules (e.g. network may update only RRC State#0 modules).

Fig. 3 illustrates a modular RRC configuration per RRC state as applied according to some example embodiments. In detail, as an example two RRC states are shown, namely RRC_State#0 and RRC_State#1. For example, RRC_State#0 can be an idle or inactive state, whereas RRC_State#1 could be a connected state. For RRC_State#0, three modules are provided, namely RRC modules #01, #02 and #03, whereas for RRC_State#1, five modules are provided, namely RRC modules #11, #12, #13, #14 and #15.

As mentioned above, all these RRC modules are stored by the UE and are applied when the UE receives a corresponding instruction or indication from the network. Alternatively, the UE may apply a certain module based on an event.

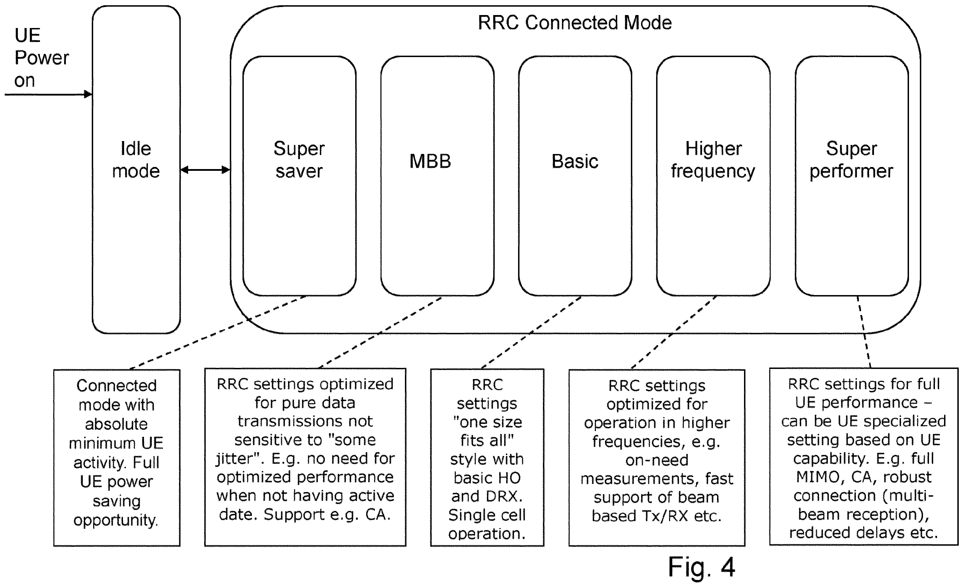

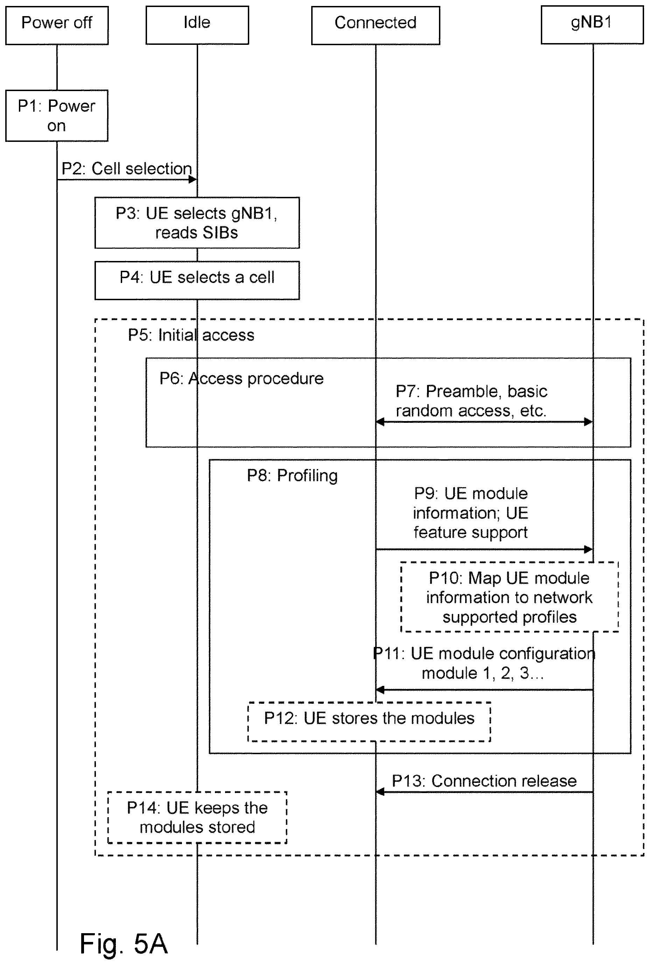

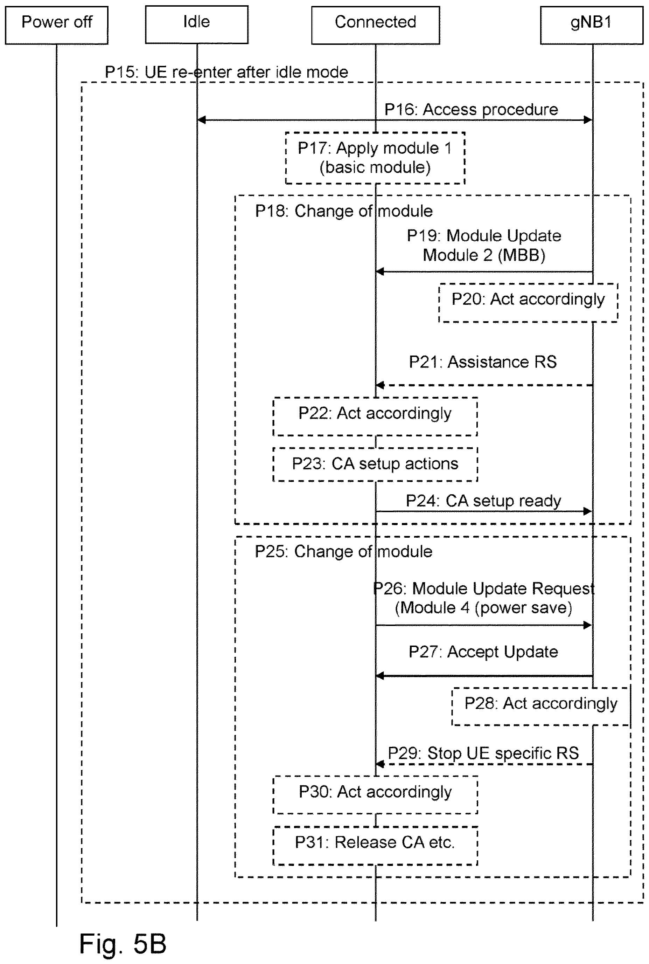

In the following, some more concrete embodiments are described by referring to Figs. 4 and 5.

For example, the UE may be applying one module (referred to as a "current module" in the following), and modules 1-2 (which are not applied) are referring to that configuration. Modules can add and/or remove (change) settings/parameters to the current module, hence, applying a different set of parameters. Moreover, some modules may be applicable to different states, for example module 1 is applicable to all RRC states (i.e. IDLE and CONNECTED), but module 2 is only applicable to CONNECTED state.

Each module may be defined to apply for one or more RRC states. That is, when a module is configured, the changes could apply to the current UE RRC state or to different RRC state. An example of the latter is configuring a resume-ready RRC module set (a module or kernel comprising the basic parameters for an RRC configuration such that operation can be resumed) where said module set applies to when the UE operates in an idle mode or even when setting up a secure connection to the network (and used as fallback from RRC connection failures occurred in RRC connected state). As another non-limiting example, an RRC configuration where a single RRC parameter is changed/added may be defined to only apply for an RRC module for the current active RRC state (i.e. the RRC state in which the UE is currently, e.g. RRC Connected state).

The extended signalling may also relate to other ways how the network updates the RRC modules/kernels stored or used in the device, ex. System Information Broadcast (SIB) signalling, etc.

In the following, one example of the different details related to an implementation of some embodiments is described. Preferably, the implementation is standardized as it influences how UE treats and interprets signalling it receives related to configuration of its RRC modules/kernel(s). It should be mentioned that below illustrates the principles of the method which may be implemented in different ways than illustrated.

In the following, first a simple signalling method (embedded in RRC configuration) is described by referring to Fig. 4.

In the above it is assumed mainly that the complete RRC configuration is collected based on active set of RRC kernels and/or modules. In the following, an implementation is provided in which the most basic case is covered. In particular:
- UE can have N complete RRC configurations stored at any given time, each has some ID to ensure consistent understanding across network and device
- Only one is active (main assumption)
- RRC signalling is extended with information element(s) (IEs) that it links to the ID of the RRC configuration for which it applies. Could be ID number and additional flags, ex. "All".

In the example described above, a module is a complete RRC configuration. Therefore, storing multiple modules means multiple RRC configurations to be stored.

This most basic approach is illustrated in Fig. 4.

For "RRC Connected mode" five complete RRC configurations are stored.

"Super Saver": connected mode with absolute minimum UE activity. Full UE power saving opportunity.

"MBB": RRC settings optimized for pure data transmissions not sensitive to "some jitter". E.g. no need for optimized performance when not having active date. Support e.g. CA.

"Basic": RRC settings "one size fits all" style with basic HO and DRX. Single cell operation.

"Higher frequency": RRC settings optimized for operation in higher frequencies, e.g. on-need measurements, fast support of beam based Tx/RX etc.

"Super performer": RRC settings for full UE performance - can be UE specialized setting based on UE capability. E.g. full MIMO, CA, robust connection (multi-beam reception), reduced delays etc.

In the following, an alternative implementation is described, which considers any generic storage of RRC modules. This alternative implementation may include:
- Applicable RRC module(s)
- Set of parameter names and/or values
- Applicable subset of radio or CPU resources associated to the RRC kernel(s) and or RRC module(s)
- Initial module used at connection setup, handover and/or re-establishment
- Change Survivability tag (Indicates which states the module may apply to)

In one example, the UE is operating in connected mode using one RRC configuration. UE is additionally configured with one or more additional modules of which some may be applicable in Idle mode, Inactive and/or Connected mode. This is indicated for example using 'change survivability tag'.

In the following, this is described by referring to a signal flow diagram shown in Figs. 5A and 5B. It is noted that Fig. 5A shows a signal flow between UE and gNB1.

For the UE, three different states are illustrated namely "Power off", "Idle" and "Connected", and the messages are illustrated such that they start/end in the corresponding state.

In process P1, the UE is powered on. The state of the UE transitions to the idle state and performs a cell selection in process P2. In process P3, the UE selects gNB1 and reads SIB(s). In process 5, the UE has selected a cell. After selection of a cell, UE accesses the cell for registration. That is, in this process, the UE identifies the candidate cell for access.

In process P5, which includes the following processes P6 to P14, an initial access is performed. In particular, in process P6 an access procedure is carried out, which includes e.g. a random access preamble in process P7 etc..

Thereafter, in process P8 profiling is carried out, which comprises the following processes P9 to P12. In particular, the modules are configured to the UE by network during a negotiation between the UE and the network. The modules may be based on UE capabilities, UE feature support, network support, network configuration support etc. to mention some examples. This is illustrated in process 10.

In detail, in process P9, the UE sends UE module information and UE feature support information to the network, i.e., the gNB1. In process P10, the gNB1 maps the received UE module information to network supported modules. Once the UE-network negotiation is finalized, the UE has a set of one or more modules, which can be applied. In process P11 these are configured to the UE and stored (process P12). Network and UE can hereafter make use of (apply) the stored modules. Therefore, in process P11, the gNB1 sends UE module configuration information including several modules (e.g., modules 1, 2,3) to the UE. In process P12, the UE stores the modules.

In process P13 the connection is released by sending a Connection Release message from the gNB1 to the UE, and the UE enters idle mode. Based on the module configuration instructions the UE keeps one or more modules while in idle mode (process P14). Hence, these are also available after UE changes states from Idle mode, for example, enters connected mode again. Thus, if UE is not released to Idle mode the network may have or included a module activation indication in the module configuration.

In the following, a procedure is described for the case in which the UE re-enters after idle mode by referring to Fig. 5B. In process P15 the UE enters connected mode. This is initiated in process P16 by access procedure. After entering connected mode, the UE will apply one or more specific modules based on a common understanding between the UE and network. This could for example be indicated in one of the module configurations. This is illustrated in process P17. In this example, module 1 (basic module) shown in Fig. 4 is applied.

In process P18, it is assumed that there is a need to update the used module and adapt the applied module. In this example, the UE is requested to update to a module, which supports a MBB connection. In this example, it could mean that the UE will activate an SCell in connection with Carrier Aggregation (CA) operation, the configuration of which is part of the stored module corresponding to MBB for higher throughput. In processes P20, P21 and P22 the network and UE act according to the activated profile. In this example, the network may transmit necessary reference signal(s) for acquiring synchronization with the SCell (Assistance RS in process P21), and UE initiates activation of the SCell (process P23). In process P24 the SCell setup and thus CA setup has been finalized.

In process P25, another example is shown how a module may be changed:
For example, in process P26, the following list is sent from the UE to the gNB1:
Set of parameter names :: { CDRX-cycle }
Set of parameter value = { 80 ms }
Applicable list of RRC module(s) = 'All'
Applicable list of RRC kernel(s) = 'None'
Permanent change tag in the RRC state = "True"_
Change Survivability at RRC state change tag = "True"_

It is noted that the difference between process P18 and process P25 is that process P18 is gNB-triggered (i.e., triggered by the gNB), while process P25 is UE triggered (i.e., triggered by the UE). That is, in process P25, the UE requests an update which is more favorable to its power consumption and the gNB only accepts the update. In this particular example, besides accepting the module update (so both UE and gNB are in agreement related to RRC configuration), the gNB also terminates the use of UE specific reference signals which helps power saving.

### Simple signaling method (relating to SIB information)

Other approaches may be used to change the stored RRC modules/kernel(s) in the device, for instance SIB signaling, paging messaging, etc. Signaling as proposed previously may be used also encoded as part of the SIB and paging message configuration, or an RRC message may be sent to UE to configure how it shall consider ex. SIB and paging messages in relation to updating the stored and active RRC entities.

The above-described example embodiments are only examples and may be modified.

In the following, a summary of example embodiments is given:
The network configures the UE with one or more sets of modules. A module consists of a set of RRC parameters and is based on e.g., UE capabilities, UE feature support, network support, network configuration support.

One module can be applied for one or more RRC states. The parameters of a module can be configured per RRC state. They might be different for each state. Some parameters may be used only in one state and others in more than one state.

A module can be activated by the network. For each RRC state one or a set of modules can be configured.

Several modules can be active, but only one RRC configuration per RRC state.

The UE can be requested to apply a certain module e.g. via L1/L2 or L3 signalling.

This is done by referring to the identifier (ID) of the stored module or set of modules to be activated, and need not use a RRCReconfiguration procedure. The information stored in the UE is already configured and reconfiguration errors can be avoided.

Thus, according to some example embodiments, one RRC configuration might consist of (or include) several modules, which is based on UE capabilities, UE and network feature support, etc. An update of a module can easily be requested both by the UE and the base station by exchanging the module ID. No reconfiguration procedure may be needed.

Hence, it is possible to implement the layered/modular RRC concept in a flexible, error-free and faster manner. Compared to existing inactive mode of operation in 5G, signaling load can be reduced too. Since all information stored in the UE is already configured, the possibility of reconfiguration errors can be removed.

Moreover, as mentioned above, a module can also be referred to as a profile. That is, the terms "module" and "profile" are interchangeable.

According to a first aspect of some example embodiments, an apparatus is provided, in a user equipment, the apparatus comprising: at least one processor and at least one memory including computer program code, the at least one memory and the computer program code configured to, with the at least one processor, cause the apparatus at least to perform: storing at least one module, the at least one module comprising at least one parameter related to radio resource control, and applying at least one module of the stored modules for use in a radio resource control configuration.

The above aspect may be modified as follows:
The at least one memory and the computer program code may be configured to, with the at least one processor, cause the apparatus to further perform: storing at least two modules, each module comprising at least one parameter related to radio resource control.

The at least one memory and the computer program code may be configured to, with the at least one processor, cause the apparatus to further perform: applying a certain module of the stored modules based on an instruction received from a network control element or based on a pre-defined event.

The at least one memory and the computer program code may be configured to, with the at least one processor, cause the apparatus to further perform: deactivating a certain module based on an instruction received from a network control element or based on a pre-defined event.

The at least one memory and the computer program code may be configured to, with the at least one processor, cause the apparatus to further perform: updating at least one parameter contained in a stored module based on an instruction received from a network control element or based on a pre-defined event.

The at least one memory and the computer program code may be configured to, with the at least one processor, cause the apparatus to further perform: receiving an indication of whether the parameter value is applicable to one or more radio resource control states.

The at least one memory and the computer program code may be configured to, with the at least one processor, cause the apparatus to further perform: receiving an indication of whether a module is applicable to one or more radio resource control states.

The at least one memory and the computer program code may be configured to, with the at least one processor, cause the apparatus to further perform: applying the at least one module by modifying those parameters which differ between the at least one module and a module or kernel currently applied, wherein the kernel comprises default parameters, or applying the at least one module by deactivating a module currently applied.

The at least one memory and the computer program code may be configured to, with the at least one processor, cause the apparatus to further perform: storing the at least one module after receiving module information including information on the at least one module from the network control element.

The at least one memory and the computer program code may be configured to, with the at least one processor, cause the apparatus to further perform: receiving the module information from the network control element in an idle state, a connected state or an inactive state of the user equipment.

The at least one memory and the computer program code may be configured to, with the at least one processor, cause the apparatus to further perform: providing capability information to the network, and receiving the module information from the network control element in response to providing the capability information.

The capability information may comprise user equipment capabilities and user equipment feature support information.

The modules may be applicable to a plurality of different radio resource control states.

The modules may be identified by identifiers.

According to a second aspect of some example embodiments, an apparatus, in a network control element, is provided, the apparatus comprising: at least one processor and at least one memory including computer program code, the at least one memory and the computer program code configured to, with the at least one processor, cause the apparatus at least to perform: receiving, from a user equipment, capability information indicating capabilities of the user equipment, determining at least one module for a radio resource control configuration for the user equipment based on the received capability information, the at least one module comprising at least one parameter related to radio resource control, and forwarding the at least one module to the user equipment.

The above second aspect may be modified as follows:
The at least one memory and the computer program code may be configured to, with the at least one processor, cause the apparatus to further perform: determining the at least one module based on the capability information received from the user equipment and based on a network configuration information and/or network feature support information.

The at least one memory and the computer program code may be configured to, with the at least one processor, cause the apparatus to further perform: storing correlation information between the user equipment and the at least one module forwarded to the user equipment, or storing information of the at least one module forwarded to the user equipment.

The at least one memory and the computer program code may be configured to, with the at least one processor, cause the apparatus to further perform: determining at least two modules for a radio resource control configuration for the user equipment based on the received capability information, each module comprising at least one parameter related to radio resource control, and forwarding the at least two modules to the user equipment.

The at least one memory and the computer program code may be configured to, with the at least one processor, cause the apparatus to further perform: sending an instruction to the user equipment to apply a certain module of modules stored in the user equipment.

The at least one memory and the computer program code may be configured to, with the at least one processor, cause the apparatus to further perform: sending an instruction to the user equipment to deactivate a certain module.

The at least one memory and the computer program code may be configured to, with the at least one processor, cause the apparatus to further perform: sending an instruction to the user equipment to update at least one parameter contained in a stored module.

The at least one memory and the computer program code may be configured to, with the at least one processor, cause the apparatus to further perform: sending an indication of whether the parameter value is applicable in which radio resource control state.

The at least one memory and the computer program code may be configured to, with the at least one processor, cause the apparatus to further perform: sending, to the user equipment, an indication of whether a module is applicable to one or more radio resource control states.

The modules may be applicable to a plurality of different radio resource control states.

The modules may be identified by identifiers.

According to a third aspect of some example embodiments, a method for use in a user equipment is provided, the method comprising:
at least one processor and at least one memory including computer program code, the at least one memory and the computer program code configured to, with the at least one processor, cause the apparatus at least to perform:
storing at least one module, the at least one module comprising at least one parameter related to radio resource control, and
applying at least one module of the stored modules for use in a radio resource control configuration.

The above third aspect may be modified as follows:
The method may further comprise:
storing at least two modules, each module comprising at least one parameter related to radio resource control.

The method may further comprise:
applying a certain module of the stored modules based on an instruction received from a network control element or based on a pre-defined event.

The method may further comprise:
deactivating a certain module based on an instruction received from a network control element or based on a pre-defined event.

The method may further comprise:
updating at least one parameter contained in a stored module based on an instruction received from a network control element or based on a pre-defined event.

The method may further comprise:
receiving an indication of whether the parameter value is applicable to one or more radio resource control states.

The method may further comprise:
receiving an indication of whether a module is applicable to one or more radio resource control states.

The method may further comprise:
applying the at least one module by modifying those parameters which differ between the at least one module and a module or kernel currently applied, wherein the kernel comprises default parameters, or
applying the at least one module by deactivating a module currently applied.

The method may further comprise:
storing the at least one module after receiving module information including information on the at least one module from the network control element.

The method may further comprise:
receiving the module information from the network control element in an idle state, a connected state or an inactive state of the user equipment.

The method may further comprise:
providing capability information to the network, and
receiving the module information from the network control element in response to providing the capability information.

The capability information may comprise user equipment capabilities and user equipment feature support information.

The modules may be applicable to a plurality of different radio resource control states.

The modules may be identified by identifiers.

According to a fourth aspect, a method for use in a network control element is provided, the method comprising:
receiving, from a user equipment, capability information indicating capabilities of the user equipment,
determining at least one module for a radio resource control configuration for the user equipment based on the received capability information, the at least one module comprising at least one parameter related to radio resource control, and
forwarding the at least one module to the user equipment.

The method may further comprise:
determining the at least one module based on the capability information received from the user equipment and based on a network configuration information and/or network feature support information.

The method may further comprise:
storing correlation information between the user equipment and the at least one module forwarded to the user equipment, or
storing information of the at least one module forwarded to the user equipment.

The method may further comprise:
determining at least two modules for a radio resource control configuration for the user equipment based on the received capability information, each module comprising at least one parameter related to radio resource control, and
forwarding the at least two modules to the user equipment.

The method may further comprise:
sending an instruction to the user equipment to apply a certain module of modules stored in the user equipment.

The method may further comprise:
sending an instruction to the user equipment to deactivate a certain module.

The method may further comprise:
sending an instruction to the user equipment to update at least one parameter contained in a stored module.

The method may further comprise:
sending an indication of whether the parameter value is applicable in which radio resource control state.

The method may further comprise:
sending, to the user equipment, an indication of whether a module is applicable to one or more radio resource control states.

The modules may be applicable to a plurality of different radio resource control states.

The modules may be identified by identifiers.

According to a fifth aspect, an apparatus is provided which comprises:
means for storing at least one module, the at least one module comprising at least one parameter related to radio resource control, and
means for applying at least one module of the stored modules for use in a radio resource control configuration.

According to a sixth aspect of some example embodiments, an apparatus is provided, which comprises:
means for receiving, from a user equipment, capability information indicating capabilities of the user equipment,
means for determining at least one module for a radio resource control configuration for the user equipment based on the received capability information, the at least one module comprising at least one parameter related to radio resource control, and
means for forwarding the at least one module to the user equipment.

The fifth and sixth aspects may be modified in a similar matter as the first and second aspects.

According to a seventh aspect of example embodiments, a computer program product is provided which comprises code means for performing a method according to any one of the second, fourth, sixth and eighth aspects and/or their modifications when run on a processing means or module. The computer program product may be embodied on a computer-readable medium, and/or the computer program product may be directly loadable into the internal memory of the computer and/or transmittable via a network by means of at least one of upload, download and push procedures.

Names of network elements, protocols, and methods are based on current standards. In other versions or other technologies, the names of these network elements and/or protocols and/or methods may be different, as long as they provide a corresponding functionality.

In general, the example embodiments may be implemented by computer software stored in the memory (memory resources, memory circuitry) 12, 22 and executable by the processor (processing resources, processing circuitry) 11, 21 or by hardware, or by a combination of software and/or firmware and hardware.

As used in this application, the term "circuitry" refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions) and
(c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in server, a cellular network device, or other network device.

The terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and printed electrical connections, as well as by the use of electromagnetic energy, such as electromagnetic energy having wavelengths in the radio frequency region, the microwave region and the optical (both visible and invisible) region, as non-limiting examples.

The memory (memory resources, memory circuitry) 12, 22 may be of any type suitable to the local technical environment and may be implemented using any suitable data storage technology, such as semiconductor based memory devices, magnetic memory devices and systems, optical memory devices and systems, fixed memory and removable memory, and non-transitory computer-readable media. The processor (processing resources, processing circuitry) 11, 21 may be of any type suitable to the local technical environment, and may include one or more of general purpose computers, special purpose computers, microprocessors, digital signal processors (DSPs) and processors based on a multi core processor architecture, as non-limiting examples.

It is to be understood that the above description is illustrative of the invention and is not to be construed as limiting the invention. Various modifications and applications may occur to those skilled in the art without departing from the true spirit and scope of the invention as defined by the appended claims.

## Claims

1. An apparatus, in a user equipment, comprising:
at least one processor and at least one memory including computer program code, the at least one memory and the computer program code configured to, with the at least one processor, cause the apparatus at least to perform:
storing at least one module, the at least one module comprising at least one parameter related to radio resource control, and
applying at least one module of the stored modules for use in a radio resource control configuration.

2. The apparatus according to claim 1, wherein the at least one memory and the computer program code are configured to, with the at least one processor, cause the apparatus to further perform:
storing at least two modules, each module comprising at least one parameter related to radio resource control.

3. The apparatus according to claim 1 or 2, wherein the at least one memory and the computer program code are configured to, with the at least one processor, cause the apparatus to further perform:
applying a certain module of the stored modules based on an instruction received from a network control element or based on a pre-defined event, and/or
deactivating a certain module based on an instruction received from a network control element or based on a pre-defined event, and/or
updating at least one parameter contained in a stored module based on an instruction received from a network control element or based on a pre-defined event.

4. The apparatus according to any one of the claims 1 to 3, wherein the at least one memory and the computer program code are configured to, with the at least one processor, cause the apparatus to further perform:
receiving an indication of whether a module or a parameter contained in a module is applicable to one or more radio resource control states.

5. The apparatus according to any one of the claims 1 to 4, wherein the at least one memory and the computer program code are configured to, with the at least one processor, cause the apparatus to further perform:
storing the at least one module after receiving module information including information on the at least one module from the network control element.

6. The apparatus according to claim 5, wherein the at least one memory and the computer program code are configured to, with the at least one processor, cause the apparatus to further perform:
receiving the module information from the network control element in an idle state, a connected state or an inactive state of the user equipment.

7. The apparatus according to claim 5 or 6, wherein the at least one memory and the computer program code are configured to, with the at least one processor, cause the apparatus to further perform:
providing capability information to the network, and
receiving the module information from the network control element in response to providing the capability information.

8. An apparatus, in a network control element, comprising:
at least one processor and at least one memory including computer program code, the at least one memory and the computer program code configured to, with the at least one processor, cause the apparatus at least to perform:
receiving, from a user equipment, capability information indicating capabilities of the user equipment,
determining at least one module for a radio resource control configuration for the user equipment based on the received capability information, the at least one module comprising at least one parameter related to radio resource control, and
forwarding the at least one module to the user equipment.

9. The apparatus according to claim 8, wherein the at least one memory and the computer program code are configured to, with the at least one processor, cause the apparatus to further perform:
determining the at least one module based on the capability information received from the user equipment and based on a network configuration information and/or network feature support information.

10. The apparatus according to claim 8 or 9, wherein the at least one memory and the computer program code are configured to, with the at least one processor, cause the apparatus to further perform:
determining at least two modules for a radio resource control configuration for the user equipment based on the received capability information, each module comprising at least one parameter related to radio resource control, and
forwarding the at least two modules to the user equipment.

11. The apparatus according to any one of the claims 8 to 10, wherein the at least one memory and the computer program code are configured to, with the at least one processor, cause the apparatus to further perform:
sending an instruction to the user equipment to apply a certain module of modules stored in the user equipment, and/or
sending an instruction to the user equipment to deactivate a certain module and/or
sending an instruction to the user equipment to update at least one parameter contained in a stored module.

12. The apparatus according to any one of the claims 1 to 11, wherein the modules are applicable to a plurality of different radio resource control states.

13. A method, for use in a user equipment, comprising:
storing at least one module, the at least one module comprising at least one parameter related to radio resource control, and
applying at least one module of the stored modules for use in a radio resource control configuration.

14. A method, for use in a network control element, the method comprising:
receiving, from a user equipment, capability information indicating capabilities of the user equipment,
determining at least one module for a radio resource control configuration for the user equipment based on the received capability information, the at least one module comprising at least one parameter related to radio resource control, and
forwarding the at least one module to the user equipment.

15. A computer program product comprising code means for performing a method according to claims 13 or 14 when run on a processing means or module.
